# EUROPEAN PATENT SPECIFICATION

(11) **EP 3 943 618 B1**
(45) Date of publication and mention of the grant of the patent: **21.02.2024**
(21) Application number: 20778550.2
(22) Date of filing: 03.03.2020
(51) Int. Cl.: C21C 1/02, C21C 5/30, C21C 5/46, C21C 5/35

(54) **BLOWING CONTROL METHOD AND BLOWING CONTROL APPARATUS FOR CONVERTER TYPE DEPHOSPHORIZATION REFINING FURNACE**
BLASSTEUERVERFAHREN UND BLASSTEUERVORRICHTUNG FÜR EINEN KONVERTERTYP ENTPHOSPHORISIERUNGSRAFFINIEROFEN
PROCÉDÉ DE COMMANDE DE SOUFFLAGE ET APPAREIL DE COMMANDE DE SOUFFLAGE POUR FOUR DE RAFFINAGE PAR DÉPHOSPHORATION DU TYPE CONVERTISSEUR

(30) Priority: 22.03.2019 JP 2019054154
(43) Date of publication of application: 26.01.2022
(73) Proprietor: JFE Steel Corporation, Tokyo 100-0011 (JP)
(72) Inventor: KASE, Hiroto, Tokyo 100-0011 (JP); TOMIYAMA, Shinji, Tokyo 100-0011 (JP); TAKAHASHI, Yukio, Tokyo 100-0011 (JP); AMANO, Shota, Tokyo 100-0011 (JP); KATO, Kohei, Tokyo 100-0011 (JP)
(74) Representative: Grünecker Patent- und Rechtsanwälte PartG mbB
(86) International application number: PCT/JP2020/008830
(87) International publication number: WO 2020/195598

(56) References cited:
- JP-A- H05 239 524
- JP-A- 2006 152 426
- JP-A- 2013 060 659
- JP-A- 2015 131 999
- JP-A- 2017 008 349
- JP-A- 2018 044 220
- JP-A1-WO2018 012 257
- US-A- 4 474 361

## Description

### Field

The present invention relates to a blowing control method and a blowing control apparatus for a converter type dephosphorization refining furnace. Background

Development of methods (desiliconization treatment, dephosphorization treatment, and desulfurization treatment) for pre-treating molten iron has been advanced in recent years, and the concentration of phosphorus or sulfur in molten iron to be charged into a converter type refining furnace is reduced to the level at which removal is no longer needed, whereby a process of refining iron and steel is nearing completion in which only decarburization refining is mainly performed in the converter type refining furnace. Desiliconization treatment and dephosphorization treatment are reactions by which silicon and phosphorus in molten iron are oxidized and removed by oxygen in an oxygen source (oxygen gas or iron oxide) supplied to the molten iron. Desulfurization treatment is a reaction by which sulfur in molten iron is removed by the sulfur reacting with a desulfurizing agent such as CaO. Dephosphorization treatment in particular is performed by immobilizing, by a CaO-containing substance added as a dephosphorization refining agent, phosphorus oxide (P₂O₅) generated by oxidation of phosphorus (P) in the molten iron with oxygen (0) in the oxygen source (FeO), as expressed by the following chemical equation (1). Note that, in the chemical equation (1), [P] and [Fe] indicate components in the molten iron and (FeO), (CaO), and (3CaO·P₂O₅) indicate components in slag.

2[P] + 5(FeO) + 3(CaO) = (3CaO · P₂O₅) + 5[Fe] (1)

In other words, dephosphorization treatment is a reaction by which the phosphorus in the molten iron is oxidized by FeO, and P₂O₅ that has been generated by this oxidation reaction reacts with CaO, to be absorbed in slag generated by slagging a CaO-containing substance. Moreover, it is known that CaO added as a solid has a higher degree of solubility in slag with a higher concentration of FeO in the slag. Dephosphorization treatment thus requires ensuring that the concentration of FeO in slag in process of treatment be equal to or higher than a predetermined value in view of dephosphorization equilibrium. Meanwhile, it is known that the phosphate capacity defined by phosphorus equilibrium between slag and metal has a high temperature dependence, and that, with a lower molten iron temperature, the equilibrium leans to dephosphorization, whereas, with a higher molten iron temperature, dephosphorization efficiency is decreased or a rephosphorization phenomenon (a phenomenon in which phosphorus in the slag returns to the molten iron) occurs. For this reason, in dephosphorization treatment, feeding excessive oxygen may increase the molten iron temperature due to the heat of various oxidation reactions and cause decreased efficiency of dephosphorization or occurrence of rephosphorization.

In view of the foregoing, it is important to ensure the concentration of FeO in slag and optimize the amount of oxygen at blow end in dephosphorization treatment. Given this backdrop, Patent Literature 1 discloses a blowing control method by which to accurately estimate the FeO concentration in slag, considering an ignition point reaction and a slag-metal interface reaction in a furnace, and, in a case in which the FeO concentration in the slag is equal to or lower than 20% when desiliconization treatment has been completed (at the time when the Si concentration has reached 0.02%), to perform a step of dephosphorization accelerating treatment. Patent Literature 2 also discloses a blowing control method by which to estimate the dephosphorization rate constant and the phosphorus concentration in molten iron on the basis of state quantity estimated values including the amount of oxygen accumulated in the furnace and measurement results of the refining furnace, and, in a case in which the estimated value of the phosphorus concentration in molten iron exceeds a target phosphorus concentration, to change treatment conditions. Patent Literatures 3-5 further disclose a blowing control method based on an evaluation of the oxygen stored in the furnace.

### Citation List

### Patent Literature

Patent Literature 1: Japanese Patent No. 6314484
Patent Literature 2: Japanese Patent No. 5582105
Patent Literature 3: US 4 474 361 A
Patent Literature 4: JP WO20 1801 2257 A1
Patent Literature 5: JP 2013 060659 A

### Summary

### Technical Problem

However, Patent Literature 1 does not disclose or suggest a method for monitoring the change of the FeO concentration in the slag after the desiliconization treatment has been completed or conditions for completing the blowing treatment, and there remains the problem that decreased efficiency of dephosphorization or a rephosphorization phenomenon resulting from a decrease in the FeO concentration in the slag at the last stage of the blowing treatment or an increase in molten iron temperature is unavoidable. Also, Patent Literature 2 discloses that the treatment conditions do not have to be changed in a case in which the estimated value of the phosphorus concentration in the molten iron is equal to or lower than the target phosphorus concentration, and, similarly to the method described in Patent Literature 1, does not intend to optimize blowing treatment conditions for preventing decreased efficiency of dephosphorization or a rephosphorization phenomenon (a phenomenon in which the dephosphorization rate constant is a negative value in Patent Literature 2, for example).

The present invention is made in view of the above problems, and it is an object of the present invention to provide a blowing control method and a blowing control apparatus for a converter type dephosphorization refining furnace that adequately control the amount of oxygen at blow end, thereby enabling a reduced phosphorus concentration in molten iron after a dephosphorization treatment and a reduced amount of an auxiliary material consumed in decarburization blowing subsequent to the dephosphorization treatment process.

### Solution to Problem

To solve the problem and achieve the object, a blowing control method for a converter type dephosphorization refining furnace as disclosed in appended claims 1-3.

Moreover, a blowing control apparatus for a converter type dephosphorization refining furnace, according to the present invention as disclosed in appended claims 4-6.

### Advantageous Effects of Invention

According to the blowing control method and the blowing control apparatus for the converter type dephosphorization refining furnace, of the present invention, it is possible to reduce phosphorus concentration in the molten iron after the dephosphorization treatment and reduce amount of the auxiliary material to be consumed in the decarburization blowing subsequent to the dephosphorization treatment process, by controlling the amount of oxygen at blow end.

### Brief Description of Drawings

FIG. 1 is a schematic diagram illustrating a construction of a refining facility suitable for a blowing control method for a converter type dephosphorization refining furnace, which is one embodiment of the present invention.
FIG. 2 is a flowchart illustrating the flow of the blowing control treatment, which is one embodiment of the present invention.
FIG. 3 is a diagram illustrating an example of a change in the amount of oxygen accumulated in a furnace over time.

### Description of Embodiments

A blowing control method for a converter type dephosphorization refining furnace, which is one embodiment of the present invention, will be described in detail below with reference to the drawings.

### [Construction of a Refining Facility]

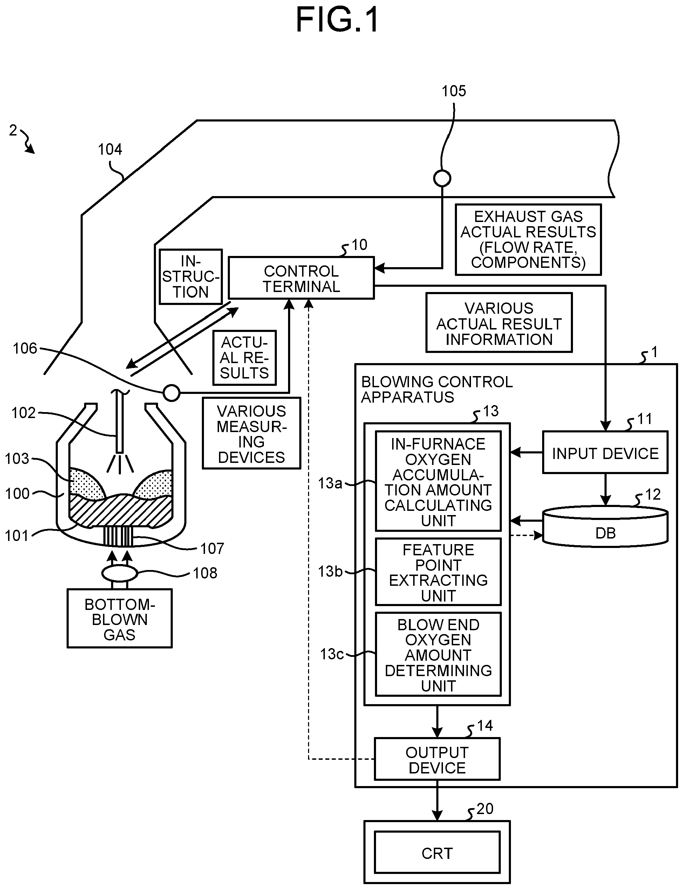

First, the construction of a refining facility suitable for a blowing control method for a converter type dephosphorization refining furnace, which is one embodiment of the present invention will be described with reference to FIG. 1.

FIG. 1 is a schematic diagram illustrating the construction of the refining facility suitable for the blowing control method for a converter type dephosphorization refining furnace, which is one embodiment of the present invention. As illustrated in FIG. 1, a refining facility 2 suitable for the blowing control method for a converter type dephosphorization refining furnace, which is one embodiment of the present invention, includes a converter type dephosphorization refining furnace 100, a lance 102, and a duct 104. The lance 102 is disposed above molten metal 101 inside the converter type dephosphorization refining furnace 100. High pressure oxygen (top-blown oxygen) is jetted from the end of the lance 102 toward the molten metal 101 located below. Because of this high pressure oxygen, impurities in the molten metal 101 are oxidized and incorporated into slag 103 (blowing treatment). The duct 104 for guiding exhaust gas is installed over the converter type dephosphorization refining furnace 100.

An exhaust gas detecting unit 105 is disposed in the interior of the duct 104. The exhaust gas detecting unit 105 detects the flow rate of exhaust gas emitted with the blowing treatment and components of the exhaust gas (CO, CO₂, O₂, N₂, H₂O, and Ar, for example). The exhaust gas detecting unit 105 measures the flow rate of exhaust gas inside the duct 104 on the basis of a pressure difference between the front and rear of a venturi tube disposed inside the duct 104, for example. The exhaust gas detecting unit 105 also measures the concentration [%] of each component of the exhaust gas. The flow rate and the component concentration of the exhaust gas are measured at intervals of a few seconds, for example. Signals indicating results detected by the exhaust gas detecting unit 105 are sent to a control terminal 10.

Bottom-blown gas is blown into the molten metal 101 inside the converter type dephosphorization refining furnace 100 through a ventilation slot 107 formed at the bottom of the converter type dephosphorization refining furnace 100. A flowmeter 108 measures the flow rate of the bottom-blown gas blown into the converter type dephosphorization refining furnace 100. The temperature and the component concentration of the molten metal 101 are analyzed immediately before the start of blowing treatment and after the blowing treatment. The temperature and the component concentration of the molten metal 101 are also measured once or multiple times during the blowing treatment, and, on the basis of the measured temperature and component concentration, the supply amount (the feed amount of oxygen) and the speed (the feed speed of oxygen) of the high pressure oxygen, the flow rate of the bottom-blown gas, or the like are determined.

A blowing control system to which a blowing control apparatus 1, which is one embodiment of the present invention, is applied, includes the control terminal 10, the blowing control apparatus 1, and a display device 20 as main constituents. The control terminal 10 is made up of an information processing device, such as a personal computer and a workstation, controls the feed amount of oxygen, the feed speed of oxygen, and the flow rate of an agitation gas so that the component concentration of the molten metal 101 falls within a desired range, and also collects data of actual result values of the feed amount of oxygen, the feed speed of oxygen, and the flow rate of the agitation gas.

The blowing control apparatus 1 is made up of an information processing device, such as a personal computer and a workstation. The blowing control apparatus 1 includes an input device 11, a database (DB) 12, a processing unit 13, and an output device 14.

The input device 11 is an interface for input to which various measurement results and actual result information of the refining facility 2 are input. The input device 11 includes a keyboard, a mouse, a pointing device, a data receiver, and a graphical user interface (GUI), for example. The input device 11 receives actual result data, parameter set values, or the like from the outside, and writes the information onto the DB 12 or transmits the information to the processing unit 13. The measurement results of the temperature and the component concentration of the molten metal 101 at least one of before the start of blowing treatment and during the blowing treatment in the refining facility 2 are input to the input device 11. The measurement results of the temperature and the component concentration are input to the input device 11 manually by an operator or by reading input from a storage medium, for example. The actual result information is also input from the control terminal 10 to the input device 11. The actual result information includes information about the flow rate and the component concentration of the exhaust gas measured by the exhaust gas detecting unit 105, various measurement results of the converter type dephosphorization refining furnace measured by a converter type dephosphorization refining furnace measuring device 106, information about the feed amount of oxygen and the feed speed of oxygen, information about the flow rate of the bottom-blown gas, information about the amount of materials (principal material and auxiliary material) to be charged, information about the temperature of the molten metal 101, for example. The measurement results of the converter type dephosphorization refining furnace including information about in-furnace and furnace body temperature, information about optical properties of a furnace opening of the converter type dephosphorization refining furnace, vibration information of the furnace body, acoustic information from the furnace body, and information about slag in the furnace and the molten metal level, for example, are output from the converter type dephosphorization refining furnace measuring device 106.

The DB 12 is a storage device in which information about model formulas related to blowing treatment reactions in the refining facility 2 and parameters for the model formulas are saved. The DB 12 also stores various types of information that has been input into the input device 11 and computational and analytical results of actual blowing treatment that have been calculated by the processing unit 13. In particular, as the computational results from a blow end oxygen amount determining unit 13c in the processing unit 13, analytical values or estimated values of components in the molten iron and slag to be used to calculate the amount of oxygen at blow end, measured values or estimated values of the temperatures of the molten iron and the slag, blowing conditions, and the measurement results of the refining facility 2 are stored in a format that is associated with blowing treatment results including components in the molten iron after the treatment.

The processing unit 13 is an arithmetic processing unit such as a central processing unit (CPU), and controls the entire operation of the blowing control apparatus 1. The processing unit 13 has functions as an in-furnace oxygen accumulation amount calculating unit 13a, a feature point extracting unit 13b, and the blow end oxygen amount determining unit 13c. The in-furnace oxygen accumulation amount calculating unit 13a, the feature point extracting unit 13b, and the blow end oxygen amount determining unit 13c are implemented by the processing unit 13 executing a computer program, for example. Note that the processing unit 13 may have dedicated arithmetic units or arithmetic circuits functioning as the in-furnace oxygen accumulation amount calculating unit 13a, the feature point extracting unit 13b, and the blow end oxygen amount determining unit 13c.

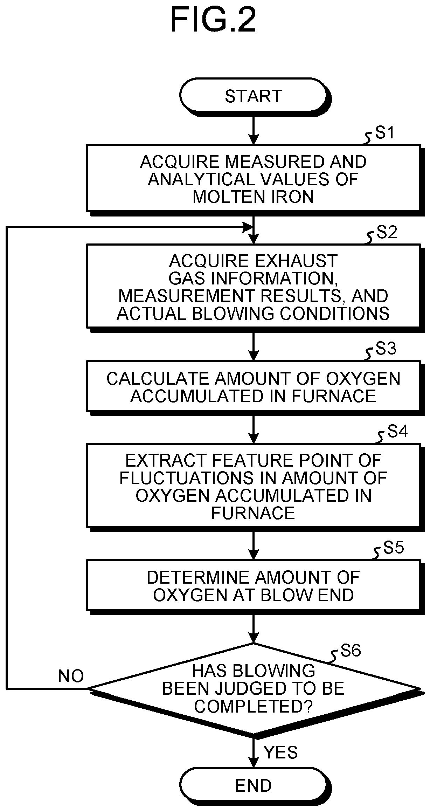

The blowing control apparatus 1 having such a construction performs blowing control processing described below, thereby adequately controlling the amount of oxygen at blow end, enabling a reduced phosphorus concentration in the molten iron after a dephosphorization treatment and a reduced amount of an auxiliary material consumed in decarburization blowing subsequent to the dephosphorization treatment process. The operation of the blowing control apparatus 1 when performing the blowing control processing will be described below with reference to a flowchart illustrated in FIG. 2.

### [Blowing control processing]

FIG. 2 is a flowchart illustrating the flow of the blowing control treatment, which is one embodiment of the present invention. The flowchart illustrated in FIG. 2 starts at the timing of starting the blowing treatment and the blowing control processing goes to Step S1.

At Step S1, the processing unit 13 acquires measured and analytical values of the molten metal 101. The processing unit 13 acquires results of measurement and analysis obtained by measuring the temperature and analyzing the components of the molten metal 101 sample. This completes Step S1 and the blowing control processing goes to Step S2.

At Step S2, the processing unit 13 acquires, from the control terminal 10, measurement results of the converter type dephosphorization refining furnace including measurement and analysis information about exhaust gas (exhaust gas information), information about in-furnace and furnace body temperature, information about optical properties of the furnace opening of the converter type dephosphorization refining furnace, vibration information of the furnace body, acoustic information from the furnace body, and information about slag in the furnace and the molten metal level, for example, and information about the amount of operation. In normal blowing operation of the converter type dephosphorization refining furnace, measurement information about the converter type dephosphorization refining furnace including measurement and analysis information about exhaust gas, and information about the amount of operation are collected at regular intervals. In a case in which there is a large time delay between an acquisition time of information about the amount of operation and an acquisition time of measurement results of the converter type dephosphorization refining furnace, data is created with consideration given to the time delay (with the measurement information advanced by the time delay). In a case in which there is much noise in a measured value and an analytical value, the measured value and the analytical value may be substituted by values on which smoothing processing, such as the moving average calculation, is performed. This completes Step S2 and the blowing control processing goes to Step S3.

At Step S3, the in-furnace oxygen accumulation amount calculating unit 13a calculates the amount of oxygen accumulated in the furnace by using a well-known method. Specifically, the in-furnace oxygen accumulation amount calculating unit 13a uses the acquired measurement results of the converter type dephosphorization refining furnace and actual blowing conditions to calculate the mass balance of carbon and oxygen in the furnace or to calculate a physical reaction model, or to perform both of them, thereby calculating the amount of oxygen accumulated in the furnace. Note that, to calculate the amount of oxygen accumulated in the furnace, the measurement results of the converter type dephosphorization refining furnace is preferably used, the measurement results including the flow rate and components of exhaust gas that have been sequentially corrected so that the carbon mass balance and the oxygen mass balance in the furnace match. Additionally, it is preferable that the amount of oxygen accumulated in the slag [mass%], the amount of oxygen accumulated in the furnace per ton of molten iron [kg/ton], and the like are not particularly limited in output format of the amount of oxygen accumulated in the furnace, and that output is performed in a form suited for use in processing of the subsequent steps (S4, S5). This completes Step S3 and the blowing control processing goes to Step S4.

At Step S4, the feature point extracting unit 13b sequentially monitors the change of the amount of oxygen accumulated in the furnace that has been calculated at Step S3, and extracts a feature point of fluctuations in the amount of oxygen accumulated in the furnace. Here, as the feature point, a point at which the amount of oxygen accumulated in the furnace turns from an upward trend to a downward trend can be illustrated, for example. The feature point at which the amount of oxygen accumulated in the furnace turns to a downward trend corresponds to a point at which decarburization reaction rate determination changes to supply rate determination of oxygen including the oxygen source in the slag, and thereafter a FeO reduction reaction advances, which further facilitates an increase in molten iron temperature due to the decarburization reaction. That is, the feature point shows that conditions of the reaction environment change to being disadvantageous to the dephosphorization reaction and change to conditions that may cause decreased efficiency of dephosphorization or occurrence of a rephosphorization phenomenon. This feature point is extracted by detecting that the rate of increase in the amount of oxygen accumulated in the furnace is equal to or less than zero or detecting a decrease in the rate of increase. Note that, at Step S4, not only the above feature point, but other feature points about the absolute value and variation of the amount of oxygen accumulated in the furnace may be extracted. This completes Step S4 and the blowing control processing goes to Step S5.

At Step S5, the blow end oxygen amount determining unit 13c calculates the amount of oxygen at blow end on the basis of the feature point extracted at Step S4. The amount of oxygen at blow end (the accumulated feed amount of oxygen with which the component concentration of the molten iron falls within a predetermined range) is determined by adding the amount of oxygen per ton of molten iron specified for the accumulated feed amount of oxygen per ton of molten iron at the feature point that has been output at Step S5. It is preferable that, for an additional value of the amount of oxygen from the accumulated feed amount of oxygen at the feature point, conditions are set on the basis of at least one piece of information of analytical values or estimated values of components in the molten iron and slag, measured values or estimated values of the temperatures of the molten iron and the slag, blowing conditions, and the measurement results of the refining furnace, and that the additional value is determined for each condition. Alternatively, a more preferred additional value of the amount of oxygen can be determined by machine learning from the relation between analytical values or estimated values of components in the molten iron and slag to be used to calculate the amount of oxygen at blow end, measured values or estimated values of the temperatures of the molten iron and slag, blowing conditions, and the measurement results of the refining furnace, and blowing treatment results including components in the molten iron after the treatment, which are stored in the DB 12. This completes Step S5 and the blowing control processing goes to Step S6.

At Step S6, the processing unit 13 judges whether the accumulated feed amount of oxygen has reached the amount of oxygen at blow end that has been output at Step S5. As a result of judgment, if the accumulated feed amount of oxygen has reached the amount of oxygen at blow end (Yes at Step S6), the processing unit 13 completes the blowing treatment, and then completes a flow of blowing control processing. If the accumulated feed amount of oxygen has not reached the amount of oxygen at blow end (No at Step S6), the processing unit 13 returns the blowing control processing to Step S2. Note that the processing interval from Step S2 to Step S6 is preferably set similarly to the interval at which measurement information about the converter type dephosphorization refining furnace including measurement and analysis information about exhaust gas, and information about the amount of operation are input to the input device 11.

As is evident from the description above, in the blowing control processing, which is one embodiment of the present invention, the feature point extracting unit 13b sequentially monitors the change of the amount of oxygen accumulated in the furnace during the blowing treatment, and extracts a feature point of fluctuations in the amount of oxygen accumulated in the furnace, the blow end oxygen amount determining unit 13c determines the amount of oxygen at blow end until the blowing treatment is completed on the basis of the feature point extracted by the feature point extracting unit 13b, the processing unit 13 completes the blowing treatment at the timing at which the accumulated feed amount of oxygen fed into the converter type dephosphorization refining furnace has reached the amount of oxygen at blow end. Thus, the blowing control processing adequately controls the amount of oxygen at blow end, thereby enabling a reduced phosphorus concentration in the molten iron after the dephosphorization treatment and a reduced amount of the auxiliary material consumed in the decarburization blowing subsequent to the dephosphorization treatment process.

### [Examples]

### (Example 1)

A top and bottom blown converter type dephosphorization refining furnace (top-blown oxygen and bottom-blown argon gas) having a capacity of 300 tons and the same form as the refining facility 2 illustrated in FIG. 1 was used to perform desiliconization and dephosphorization of the molten metal 101. Specifically, iron scrap was first charged into the refining facility 2, and then 300 tons of molten iron having a temperature within the range 1200°C to 1380°C was charged into the converter type dephosphorization refining furnace. Subsequently, while argon gas was being blown from the ventilation slot 107 into the molten metal for agitation, oxygen gas was blown from the top-blown lance 102 toward the molten metal surface, and desiliconization refining of the molten iron was started. Note that the charging amount of the iron scrap was adjusted so that the molten iron temperature after the dephosphorization refining was completed was 1360°C. During the desiliconization treatment, the basicity (the CaO concentration in the slag [mass%] /the SiO₂ concentration in the slag [mass%]) at desiliconization was made to fall within the range of 0.8 to 1.0, the slag 103 was discharged after a lapse of about five minutes, and thereafter the dephosphorization refining was continued while the basicity was controlled to fall within the range of 1.0 to 1.5.

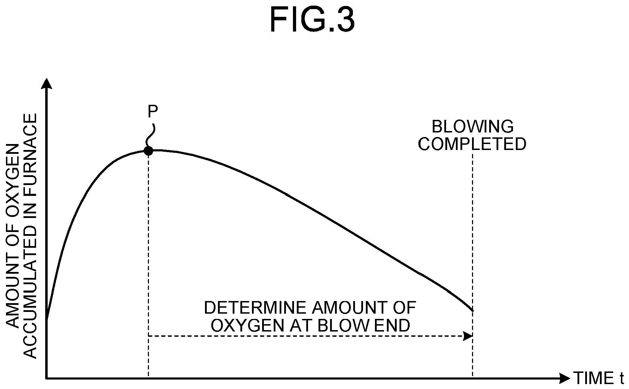

During the dephosphorization refining, the processing unit 13 calculated the amount of oxygen accumulated in the furnace, extracted a feature point, determined the amount of oxygen at blow end. In the present example, as illustrated in FIG. 3, a point P at which the rate of increase in the amount of oxygen accumulated in the furnace is zero was extracted as the feature point, and, to calculate the amount of oxygen at blow end, determination was made by adding an amount of oxygen per ton of molten iron 5.9 Nm³/ton for the accumulated feed amount of oxygen at the feature point. At the last stage of the dephosphorization refining, the ending time of the dephosphorization refining was controlled so that the accumulated feed amount of oxygen when the blowing treatment was completed falls within the range of +0 to +2 Nm³/ton as compared with the amount of oxygen at blow end output from the processing unit 13.

### (Example 2)

Under the same operating conditions as those in Example 1, at the last stage of the dephosphorization refining, the ending time of the dephosphorization refining was controlled so that the accumulated feed amount of oxygen when the blowing treatment was completed falls within the range of -3 to +0 Nm³/ton as compared with the amount of oxygen at blow end output from the processing unit 13.

### (Example 3)

Under the same operating conditions as those in Example 1, at the last stage of the dephosphorization refining, the ending time of the dephosphorization refining was controlled so that the accumulated feed amount of oxygen when the blowing treatment was completed falls within the range of +2 to +5 Nm³/ton as compared with the amount of oxygen at blow end output from the processing unit 13.

### [Evaluation]

Table 1 below illustrates results of performing blowing treatments about 30 charges each under the conditions indicated in Examples 1 to 3 and comparing average values of analytical values of the phosphorus concentration in the molten iron after the blowing treatments. For Example 1, the blowing treatment was performed in accordance with the blowing control method of one embodiment of the present invention, the phosphorus concentration in the molten iron after the blowing treatment was lower than those in Example 2 and Example 3. For Example 2, because the blowing treatment time was insufficient with respect to the time required for dephosphorization, that is, the time for the phosphorus concentration in the molten iron to reach equilibrium, the phosphorus concentration in the molten iron after the treatment was high. On the other hand, for Example 3, because, due to feeding of excessive oxygen, decreased efficiency of dephosphorization or a rephosphorization phenomenon occurred resulting from a decrease in FeO concentration in the slag at the last stage of the treatment or an increase in molten iron temperature, the phosphorus concentration in the molten iron after the treatment was high. From the above, it was verified that, according to the present invention, the phosphorus concentration in the molten iron after the treatment can be reduced by monitoring the change of the amount of oxygen accumulated in the furnace (the FeO concentration in the slag) and adequately controlling the amount of oxygen at blow end in dephosphorization treatment.

**Table 1**

| | Example 2 | Example 1 | Example 3 |
|---|---|---|---|
| ΔQ_{O2} [Nm³/t] | -3 to 0 | 0 to 2 | 2 to 5 |
| Phosphorus concentration in molten iron after treatment [%] | 0.0293 | 0.0268 | 0.0284 |

### Industrial Applicability

According to the present invention, a blowing control method and a blowing control apparatus for a converter type dephosphorization refining furnace can be provided that adequately control the amount of oxygen at blow end, thereby enabling a reduced phosphorus concentration in molten iron after a dephosphorization treatment and a reduced amount of an auxiliary material consumed in decarburization blowing subsequent to the dephosphorization treatment process.

### Reference Signs List

- 1: Blowing control apparatus
- 2: Refining facility
- 10: Control terminal
- 11: Input device
- 12: Database (DB)
- 13: Processing unit
- 13a: In-furnace oxygen accumulation amount calculating unit
- 13b: Feature point extracting unit
- 13c: Blow end oxygen amount determining unit
- 14: Output device
- 20: Display device
- 100: Converter type dephosphorization refining furnace
- 101: Molten metal
- 102: Lance
- 103: Slag
- 104: Duct
- 105: Exhaust gas detecting unit
- 107: Ventilation slot
- 108: Flowmeter

## Claims

1. A blowing control method for a converter type dephosphorization refining furnace, the method comprising:
an in-furnace oxygen accumulation amount calculating step of calculating an amount of oxygen accumulated in a furnace, based on
blowing conditions including a feed amount of oxygen and a charging amount of auxiliary material for a converter type dephosphorization refining furnace,
measurement results of the converter type dephosphorization refining furnace including a flow rate and a component concentration of exhaust gas in the converter type dephosphorization refining furnace, and
analytical values of components and a temperature of molten iron;
a feature point extracting step of
sequentially monitoring a change of the amount of oxygen accumulated in the furnace during a blowing treatment and
extracting a feature point of fluctuations in the amount of oxygen accumulated in the furnace;
a blow end oxygen amount determining step of determining an amount of oxygen at blow end until the blowing treatment is completed, based on the feature point extracted at the feature point extracting step; and
a control step of completing the blowing treatment at a timing at which the accumulated feed amount of oxygen fed into the converter type dephosphorization refining furnace has reached the amount of oxygen at blow end determined at the blow end oxygen amount determining step,
wherein the feature point extracting step includes
a step of extracting, as a feature point, a point at which a rate of increase in the amount of oxygen accumulated in the furnace is equal to or less than zero.

2. The blowing control method for the converter type dephosphorization refining furnace according to claim 1, wherein the in-furnace oxygen accumulation amount calculating step includes
a step of sequentially correcting the measurement results of the converter type dephosphorization refining furnace so that a carbon mass balance and an oxygen mass balance in the furnace match, and calculating the amount of oxygen accumulated in the furnace by using the corrected measurement results.

3. The blowing control method for the converter type dephosphorization refining furnace according to claim 1 or 2, wherein the blow end oxygen amount determining step includes
a step of calculating, or determining by machine learning, the amount of oxygen at blow end, based on at least one piece of information of
analytical values or estimated values of components in the molten iron and slag,
measured values or estimated values of the temperatures of the molten iron and the slag,
blowing conditions, and
the measurement results of the converter type dephosphorization refining furnace.

4. A blowing control apparatus (1) for a converter type dephosphorization refining furnace (100), the apparatus comprising:
an in-furnace oxygen accumulation amount calculating unit (13a) configured to calculate an amount of oxygen accumulated in a furnace, based on
blowing conditions including a feed amount of oxygen and a charging amount of auxiliary material for a converter type dephosphorization refining furnace,
measurement results of the converter type dephosphorization refining furnace including a flow rate and a component concentration of exhaust gas in the converter type dephosphorization refining furnace, and
analytical values of components and a temperature of molten iron;
a feature point extracting unit (13b) configured to
sequentially monitor a change of the amount of oxygen accumulated in the furnace during a blowing treatment and
extract a feature point of fluctuations in the amount of oxygen accumulated in the furnace;
a blow end oxygen amount determining unit (13c) configured to determine an amount of oxygen at blow end until the blowing treatment is completed, based on the feature point extracted by the feature point extracting unit; and
a control unit (13) configured to complete the blowing treatment at a timing at which the accumulated feed amount of oxygen fed into the converter type dephosphorization refining furnace (100) has reached the amount of oxygen at blow end determined by the blow end oxygen amount determining unit (13c),
wherein the feature point extracting unit (13b) is configured to
extract, as a feature point, a point at which a rate of increase in the amount of oxygen accumulated in the furnace is equal to or less than zero.

5. The blowing control apparatus (1) for the converter type dephosphorization refining furnace (100) according to claim 4, wherein the in-furnace oxygen accumulation amount calculating unit (13a) is configured to
sequentially correct the measurement results of the converter type dephosphorization refining furnace so that a carbon mass balance and an oxygen mass balance in the furnace match, and
calculate the amount of oxygen accumulated in the furnace by using the corrected measurement results.

6. The blowing control apparatus (1) for the converter type dephosphorization refining furnace (100) according to claim 4 or 5, wherein the blow end oxygen amount determining unit (13c) is configured to
calculate, or determines by machine learning, the amount of oxygen at blow end, based on at least one piece of information of
analytical values or estimated values of components in the molten iron and slag,
measured values or estimated values of the temperatures of the molten iron and the slag,
blowing conditions, and
the measurement results of the converter type dephosphorization refining furnace.

## Patentansprüche

1. Verfahren zur Steuerung des Einblasens für einen Entphosphorungs-Raffinationsofen vom Konvertertyp, wobei das Verfahren umfasst:
einen Schritt zur Berechnung der im Ofen akkumulierten Sauerstoffmenge, bei dem eine in einem Ofen akkumulierte Sauerstoffmenge berechnet wird, basierend auf:
Einblasbedingungen, die eine Zufuhrmenge an Sauerstoff und eine Beschickungsmenge an Hilfsmaterial für einen Entphosphorungs-Raffinationsofen vom Konvertertyp einschließen,
Messergebnissen des Entphosphorungs-Raffinationsofens vom Konvertertyp, die eine Durchflussrate und einer Komponentenkonzentration des Abgases im Entphosphorungs-Raffinationsofen vom Konvertertyp einschließen, und
analytischen Werten von Komponenten und einer Temperatur von geschmolzenem Eisen,
einen Schritt zum Extrahieren von Merkmalspunkten, welcher umfasst:
sequentielles Überwachen einer Änderung der in dem Ofen akkumulierten Sauerstoffmenge während einer Blasbehandlung und
Extrahieren eines Merkmalspunktes von Schwankungen in der im Ofen akkumulierten Sauerstoffmenge,
einen Schritt zum Bestimmen der Sauerstoffmenge am Blasende, um eine Sauerstoffmenge am Blasende zu bestimmen, bis die Blasbehandlung abgeschlossen ist, basierend auf dem Merkmalspunkt, der in dem Schritt zum Extrahieren von Merkmalspunkten extrahiert wurde, und
einen Steuerschritt zum Abschließen der Blasbehandlung zu einem Zeitpunkt, zu dem die akkumulierte Zufuhrmenge an Sauerstoff, die in den Entphosphorungs-Raffinationsofen vom Konvertertyp eingespeist wird, die Sauerstoffmenge am Blasende erreicht hat, die in dem Schritt zur Bestimmung der Sauerstoffmenge am Blasende bestimmt wurde,
wobei der Schritt des Extrahierens von Merkmalspunkten umfasst:
einen Schritt des Extrahierens eines Punktes als Merkmalspunkt, an dem eine Steigerungsrate der in dem Ofen akkumulierten Sauerstoffmenge gleich oder kleiner als Null ist.

2. Verfahren zur Steuerung des Einblasens für den Entphosphorungs-Raffinationsofen vom Konvertertyp gemäß Anspruch 1, wobei der Schritt zur Berechnung der im Ofen akkumulierten Sauerstoffmenge umfasst:
einen Schritt des sequentiellen Korrigierens der Messergebnisse des Entphosphorungs-Raffinationsofens vom Konvertertyp, so dass eine Kohlenstoffmassenbilanz und eine Sauerstoffmassenbilanz in dem Ofen übereinstimmen, und des Berechnens der in dem Ofen akkumulierten Sauerstoffmenge unter Verwendung der korrigierten Messergebnisse.

3. Verfahren zur Steuerung des Einblasens für den Entphosphorungs-Raffinationsofen vom Konvertertyp gemäß Anspruch 1 oder 2, wobei der Schritt zur Bestimmung der Sauerstoffmenge am Einblasende umfasst:
einen Schritt der Berechnung oder der Bestimmung durch maschinelles Lernen der Sauerstoffmenge am Blasende auf der Grundlage von mindestens einer Information aus:
analytischen Werten oder geschätzten Werten von Komponenten im geschmolzenen Eisen und in der Schlacke,
Messwerten oder geschätzten Werten der Temperaturen des geschmolzenen Eisens und der Schlacke,
Einblasbedingungen und
den Messergebnissen des Entphosphorungs-Raffinationsofens vom Konvertertyp.

4. Vorrichtung (1) zur Steuerung des Einblasens für einen Entphosphorungs-Raffinationsofen (100) vom Konvertertyp, wobei die Vorrichtung umfasst:
eine Einheit (13a) zur Berechnung der im Ofen akkumulierten Sauerstoffmenge, die so konfiguriert ist, dass sie eine in einem Ofen akkumulierte Sauerstoffmenge berechnet, basierend auf:
Einblasbedingungen einschließlich einer Zufuhrmenge von Sauerstoff und einer Beschickungsmenge von Hilfsmaterial für einen Entphosphorungs-Raffinationsofen vom Konvertertyp,
Messergebnissen des Entphosphorungs-Raffinationsofens vom Konvertertyp, einschließlich einer Durchflussrate und einer Komponentenkonzentration des Abgases im Entphosphorungs-Raffinationsofen vom Konvertertyp, und analytischen Werten von Komponenten und eine Temperatur von geschmolzenem Eisen,
eine Einheit zur Extraktion von Merkmalspunkten (13b), die konfiguriert ist, um
sequentiell eine Änderung der in dem Ofen akkumulierten Sauerstoffmenge während einer Blasbehandlung zu überwachen und
einen Merkmalspunkt von Schwankungen in der im Ofen akkumulierten Sauerstoffmenge zu extrahieren,
eine Einheit (13c) zur Bestimmung der Sauerstoffmenge am Ende des Blasvorgangs, die so konfiguriert ist, dass sie die Sauerstoffmenge am Ende des Blasvorgangs bis zum Abschluss der Blasbehandlung auf der Grundlage des von der Einheit zur Extraktion von Merkmalspunkten extrahierten Merkmalspunkts bestimmt, und
eine Steuereinheit (13), die so konfiguriert ist, dass sie die Blasbehandlung zu einem Zeitpunkt abschließt, zu dem die akkumulierte Zufuhrmenge an Sauerstoff, die in den Entphosphorungs-Raffinationsofen (100) vom Konvertertyp eingespeist wird, die Sauerstoffmenge am Blasende erreicht hat, die von der Einheit (13c) zur Bestimmung der Sauerstoffmenge am Blasende bestimmt wurde,
wobei die Einheit zur Extraktion von Merkmalspunkten (13b) konfiguriert ist, um einen Punkt als Merkmalspunkt zu extrahieren, bei dem eine Steigerungsrate der in dem Ofen akkumulierten Sauerstoffmenge gleich oder kleiner als Null ist.

5. Vorrichtung (1) zur Steuerung des Einblasens für den Entphosphorungs-Raffinationsofen (100) vom Konvertertyp gemäß Anspruch 4, wobei die Einheit (13a) zur Berechnung der im Ofen akkumulierten Sauerstoffmenge konfiguriert ist, um
die Messergebnisse des Entphosphorungs-Raffinationsofens vom Konvertertyp sequentiell zu korrigieren, so dass eine Kohlenstoffmassenbilanz und eine Sauerstoffmassenbilanz in dem Ofen übereinstimmen, und
die Menge des im Ofen akkumulierten Sauerstoffs unter Verwendung der korrigierten Messergebnisse zu berechnen.

6. Vorrichtung (1) zur Steuerung des Einblasens für den Entphosphorungs-Raffinationsofen (100) vom Konvertertyp gemäß Anspruch 4 oder 5, wobei die Einheit (13c) zur Bestimmung der Sauerstoffmenge am Einblasende konfiguriert ist, um
die Sauerstoffmenge am Blasende zu berechnen oder durch maschinelles Lernen zu bestimmen, basierend auf mindestens einer Information von
analytischen Werten oder geschätzten Werten von Komponenten im geschmolzenen Eisen und in der Schlacke,
Messwerten oder geschätzten Werten der Temperaturen des geschmolzenen Eisens und der Schlacke,
Einblasbedingungen und
den Messergebnissen des Entphosphorungs-Raffinationsofens vom Konvertertyp.

## Revendications

1. Procédé de commande de soufflage pour un four de raffinage de déphosphoration de type convertisseur, le procédé comprenant :
une étape de calcul de la quantité d'accumulation d'oxygène à l'intérieur d'un four consistant à calculer une quantité d'oxygène accumulée dans un four, en fonction
des conditions de soufflage incluant une quantité d'introduction d'oxygène et une quantité de chargement d'un matériau auxiliaire pour un four de raffinage de déphosphoration de type convertisseur,
des résultats de mesure sur le four de raffinage de déphosphoration de type convertisseur incluant un débit et une concentration de constituants de gaz d'échappement dans le four de raffinage de déphosphoration de type convertisseur, et
des valeurs d'analyse de constituants et d'une température de fer fondu ;
une étape d'extraction de point caractéristique consistant à
successivement surveiller une variation de la quantité d'oxygène accumulée dans le four pendant un traitement de soufflage et
extraire un point caractéristique de fluctuations de la quantité d'oxygène accumulée dans le four ;
une étape de détermination de la quantité d'oxygène de fin de soufflage consistant à déterminer une quantité d'oxygène en fin de soufflage jusqu'à ce que le traitement de soufflage soit achevé, sur la base du point caractéristique extrait à l'étape d'extraction de point caractéristique ; et
une étape de commande consistant à achever le traitement de soufflage à un moment où la quantité accumulée d'introduction d'oxygène qui a été introduite dans le four de raffinage de déphosphoration de type convertisseur a atteint la quantité d'oxygène en fin de soufflage déterminée à l'étape de détermination de la quantité d'oxygène de fin de soufflage,
dans lequel l'étape d'extraction de point caractéristique comprend
une étape consistant à extraire, en tant que point caractéristique, un point où une vitesse d'augmentation de la quantité d'oxygène accumulée dans le four est égale ou inférieure à zéro.

2. Procédé de commande de soufflage pour le four de raffinage de déphosphoration de type convertisseur selon la revendication 1, dans lequel l'étape de calcul de la quantité d'accumulation d'oxygène à l'intérieur d'un four comprend
une étape consistant successivement à corriger les résultats de mesure sur le four de raffinage de déphosphoration de type convertisseur de façon à ce qu'un bilan massique du carbone et qu'un bilan massique de l'oxygène dans le four correspondent, et à calculer la quantité d'oxygène accumulée dans le four en utilisant les résultats de mesure corrigés.

3. Procédé de commande de soufflage pour le four de raffinage de déphosphoration de type convertisseur selon la revendication 1 ou 2, dans lequel l'étape de détermination de la quantité d'oxygène de fin de soufflage comprend
une étape consistant à calculer, ou à déterminer par apprentissage machine, la quantité d'oxygène en fin de soufflage, sur la base d'au moins un élément d'information parmi
des valeurs d'analyse ou des valeurs estimées de constituants dans le fer fondu et le laitier,
des valeurs mesurées ou des valeurs estimées des températures du fer fondu et du laitier,
des conditions de soufflage, et
les résultats de mesure sur le four de raffinage de déphosphoration de type convertisseur.

4. Appareil de commande de soufflage (1) pour un four de raffinage de déphosphoration de type convertisseur (100), l'appareil comprenant :
une unité de calcul de quantité d'accumulation d'oxygène à l'intérieur d'un four (13a) conçue pour calculer une quantité d'oxygène accumulée dans un four, en fonction
des conditions de soufflage incluant une quantité d'introduction d'oxygène et une quantité de chargement d'un matériau auxiliaire pour un four de raffinage de déphosphoration de type convertisseur,
des résultats de mesure sur le four de raffinage de déphosphoration de type convertisseur incluant un débit et une concentration de constituants de gaz d'échappement dans le four de raffinage de déphosphoration de type convertisseur, et
des valeurs d'analyse de constituants et d'une température de fer fondu ;
une unité d'extraction de point caractéristique (13b) conçue pour
successivement surveiller une variation de la quantité d'oxygène accumulée dans le four pendant un traitement de soufflage et
extraire un point caractéristique de fluctuations de la quantité d'oxygène accumulée dans le four ;
une unité de détermination de la quantité d'oxygène de fin de soufflage (13c) conçue pour déterminer une quantité d'oxygène en fin de soufflage jusqu'à ce que le traitement de soufflage soit achevé, sur la base du point caractéristique extrait par l'unité d'extraction de point caractéristique ; et
une unité de commande (13) conçue pour achever le traitement de soufflage à un moment où la quantité accumulée d'introduction d'oxygène qui a été introduite dans le four de raffinage de déphosphoration de type convertisseur (100) a atteint la quantité d'oxygène en fin de soufflage déterminée par l'unité de détermination de la quantité d'oxygène de fin de soufflage (13c),
dans lequel l'unité d'extraction de point caractéristique (13b) est conçue pour
extraire, en tant que point caractéristique, un point où une vitesse d'augmentation de la quantité d'oxygène accumulée dans le four est égale ou inférieure à zéro.

5. Appareil de commande de soufflage (1) pour le four de raffinage de déphosphoration de type convertisseur (100) selon la revendication 4, dans lequel l'unité de calcul de quantité d'accumulation d'oxygène à l'intérieur d'un four (13a) est conçue pour
corriger séquentiellement les résultats de mesure sur le four de raffinage de déphosphoration de type convertisseur de façon à ce qu'un bilan massique du carbone et qu'un bilan massique de l'oxygène dans le four correspondent, et
calculer la quantité d'oxygène accumulée dans le four en utilisant les résultats de mesure corrigés.

6. Appareil de commande de soufflage (1) pour le four de raffinage de déphosphoration de type convertisseur (100) selon la revendication 4 ou 5, dans lequel l'unité de détermination de la quantité d'oxygène de fin de soufflage (13c) est conçue pour
calculer, ou déterminer par apprentissage machine, la quantité d'oxygène en fin de soufflage, sur la base d'au moins un élément d'information parmi
des valeurs d'analyse ou des valeurs estimées de constituants dans le fer fondu et le laitier,
des valeurs mesurées ou des valeurs estimées des températures du fer fondu et du laitier,
des conditions de soufflage, et
les résultats de mesure sur le four de raffinage de déphosphoration de type convertisseur.
